# EUROPÄISCHE PATENTANMELDUNG

(11) **EP 1 777 445 A1**
(43) Veröffentlichungstag der Anmeldung: **25.04.2007**
(21) Anmeldenummer: 05022934.3
(22) Anmeldetag: 20.10.2005
(51) Int. Cl.: F16J 15/32

(54) **Dichtungsplättchen zum Vermindern einer Leckageströmung**

(71) Anmelder: SIEMENS AKTIENGESELLSCHAFT, 80333 München (DE)
(72) Erfinder: Neef, Matthias, Dr., 45468 Mülheim an der Ruhr (DE); Sürken, Norbert, 45468 Mülheim a.d. Ruhr (DE)

(57) **Zusammenfassung**

Die Erfindung betrifft eine Dichtungsplättchen (12) zum Vermindern einer Leckageströmung in einem Spalt (9) zwischen einem ersten Bauteil und einem relativ zum ersten Bauteil bewegbaren zweiten Bauteil. Die Erfindung bezieht sich in erster Linie auf Leckageströmungen, die zwischen rotierenden und feststehenden Bauteilen z. B. in Strömungsmaschinen entstehen. Die Dichtungseinrichtung (11) umfasst im wesentlichen Dichtungsplättchen (12), die gebogen oder geknickt ausgebildet sind, um einen Abtrieb des Plättchens (12) in Richtung des Spaltes (9) zu erzeugen, wodurch die Dichtwirkung erhöht wird.

## Beschreibung

Die Erfindung betrifft ein Dichtungsplättchen zum Vermindern einer Leckageströmung in einem Spalt zwischen einem ersten Bauteil und einem relativ zum ersten Bauteil bewegbaren zweiten Bauteil, wobei im Betrieb eine Leckageströmung in einer Leckageströmungsrichtung durch den Spalt strömt, wobei das Dichtungsplättchen eine Fußkante zur Befestigung am ersten oder zweiten Bauteil und eine freie Stirnkante aufweist.

Unter der Sammelbezeichnung "Strömungsmaschinen" werden Wasserturbinen, Dampf- und Gasturbinen, Windräder, Kreiselpumpen und Kreiselverdichter sowie Propeller zusammengefasst. Allen diesen Maschinen ist gemeinsam, dass sie dem Zweck dienen, einem Fluid Energie zu entziehen, um damit eine andere Maschine anzutreiben oder umgekehrt, einem Fluid Energie zuzuführen, um dessen Druck zu erhöhen.

In den Strömungsmaschinen ist eine wesentliche Voraussetzung der Energiewandlung das Vorhandensein eines drehbar beweglichen Systems, umfassend einen Rotor. Um eine Drehung einer nach außen abgeschlossenen Strömungsmaschine zu gewährleisten, sind hierbei Spalte in radialer Richtung zwischen rotierenden und stehenden Maschinenteilen unvermeidbar. Durch diese Spalte strömen in der Regel wegen anstehender Druckdifferenzen Leckagemassenströme, die für fast alle technischen Anwendungen unerwünscht sind und als Verlust zu werten sind.

Dichtungen werden z.B. an den Wellenenden, auf dem Schubausgleichskolben und über den Deckbändern in der Beschaufelung von Dampfturbinen verwendet.

Eine bekannte Dichtungseinrichtung ist beispielsweise die so genannte Labyrinthdichtung. Der Aufbau und die Wirkungsweise dieser Labyrinthdichtung erfolgt wie nachfolgend beschrieben. Der Spaltstrom, den diese Dichtung stets durchtreten lässt, wird klein gehalten, indem der Dampf unter Druckabsenkung in engen Spalten beschleunigt, und die erreichte kinetische Energie in den anschließenden Ringräumen verwirbelt wird. Entscheidender Einfluss ist hierbei die Anzahl der Dichtspalte und das verbleibende Spiel zwischen rotierendem und stehendem Bauteil.

Verbessert werden können Labyrinthdichtungen durch die Kombination mit abrasiven Schichten, Retractable-Seals und federnden Dichtsegmenten. Eine weitere Dichtungsmöglichkeit neben herkömmlichen Labyrinthdichtungen besteht in der Anwendung von Bürstendichtungen wie in der US 2004/0150165 A1 beschrieben. Ferner wurden außerdem so genannte "Leaf-Seals" und "Finger-Seals" entwickelt, die als Weiter- bzw. Parallelentwicklungen zu den vorhandenen Bürstendichtungen zu verstehen sind.

Bei Bürstendichtungen, Leaf-Seals und Finger-Seals werden die Dichtelemente mit einem Legewinkel zur Tangente des stehenden Bauteils an das drehende Bauteil ausgeführt. Das drehende Bauteil umfasst beispielsweise die Welle oder das Schaufeldeckband. Dabei wird ein so genannter "Blow-Down-Effekt" ausgenutzt. Gemäß diesem Effekt werden die vorwiegend in den stehenden Maschinenteilen angebrachten Bürstenhaare oder Dichtungsbleche durch eine Kraft in Richtung des rotierenden Maschinenteils gedrückt, wobei die Kraft hier durch eine radiale Druckdifferenz in Richtung des rotierenden Maschinenteils aerodynamisch hervorgerufen wird. Dieser aerodynamische Effekt beruht auf einer Absenkung des statischen Druckes im Radialspalt durch die entstehende schnelle Spaltströmung. Diese schnelle Spaltströmung wird auch als "Jet" bezeichnet. Nachteilig ist hierbei, dass die Kraft, die zum Blow-Down-Effekt führt, abhängig von der Steifigkeit des Dichtungselementes ist und erst ab einem definierten Leckagemassenstrom einsetzt. Dadurch wird eine Untergrenze der erzielbaren Leckagemassenströme festgelegt.

Eine Dichtungseinrichtung ist ebenfalls in der DE 35 02 096 A1 beschrieben. In dieser Schrift wird eine Dichtungseinrichtung umfassend eine Dichtungsplatte offenbart, wobei die Einrichtung eine flexible Membran enthält, die an einem Haltebügel und der Dichtungsplatte fest angebracht ist, um eine Leckage von Gas durch eine Gelenkeinrichtung zu verhindern.

Eine Dichtung, bestehend aus mehreren Dichtungsplättchen, ist in der US 6,267,381 offenbart. Die Plättchen sind hierbei starr ausgeführt und so gut wie unbeweglich in einem Spalt angeordnet.

Des Weiteren sollten Dichtungen derart ausgebildet sein, dass die Möglichkeit besteht, dass das rotierende System in einer umgekehrten Drehrichtung bewegt werden kann. Dies ist vor allem bei dem "Windmilling"-Phänomen bei Flugtriebwerken oder bei einem Rückwärtsturnbetrieb bei Dampfturbinen während eines Wartungsintervalls erforderlich. Diese Möglichkeit ist für die gerichteten Dichtelemente, die aus angestellten Bürstenhaaren sowie Dichtungsblechen von Leaf- und Finger-Seals gebildet sind, kaum realisierbar, lediglich unter Inkaufnahme vergrößerter Leckagemasseströme wäre dies zu erfüllen.

Weitere Dichtungsmöglichkeiten sind z. B. abrasive Schichten, Retractabel-Seals und federnde Dichtsegmente. Dazu gibt es noch so genannte Leaf-Seals und Finger-Seals, die als Weiter- bzw. Parallelentwicklungen zu den vorhandenen Bürstendichtungen zu verstehen sind.

Es ist daher Aufgabe der Erfindung eine Dichtungsanordnung anzugeben, die für unterschiedliche Spaltmassenströme eine gute Dichtwirkung zeigt.

Gelöst wird diese Aufgabe durch eine Dichtungseinrichtung gemäß Anspruch 1. Vorteilhafte Weiterbildungen sind in den Unteransprüchen enthalten.

Der wesentliche Vorteil der Erfindung beruht darin, dass die durch eine aerodynamisch motivierte geometrische Veränderung von Dichtungsplättchen einer Leaf-Seal-Anordnung in einem freistehenden Radialspaltbereich die Untergrenze eines erzielbaren Leckagemassenstroms abgesenkt wird. Somit werden auch die Leckageverluste insgesamt reduziert.

Ein weiterer Vorteil ist, dass ein Rückwärtsdrehen, auch als Rückwärtsturnen bezeichnet, durch die vergrößerten Kaltspiele stark verbessert wird.

Durch die Auf- bzw. Abtriebskräfte wird der Blow-Down-Effekt des Dichtungsblattes verstärkt. Ein weiterer Vorteil ist, dass die Leckageströmung zusätzlich reduziert werden kann, da durch die gegenüber einer konventionellen Blattform bei gleicher axialer Baulänge ein zusätzlicher Druckabbau durch das vergleichsweise langsam durchströmte Dichtungspaket ermöglicht wird.

Ein weiterer Vorteil ist, dass durch die Federwirkung der gerichtet angeordneten Dichtungsblätter ein ungewolltes Anstreifen des rotierenden Bauteils an der Dichtung keine größeren Schäden hervorruft, da die Dichtung flexibel zurückgeschoben werden kann.

Ein weiterer Vorteil ist, dass über die gesamte Blatthöhe der Blow-Down-Effekt aufgrund statischer Druckdifferenzen auftreten kann.

Des Weiteren ist ein Vorteil darin zu sehen, dass ein unterer Dichtungsblatt-Bereich, der zum rotierenden Bauteil hin endet, immer einen aerodynamischen Abtrieb erfährt.

Es entsteht eine weiterer Vorteil dadurch, dass durch die struktur-geometrische Versteifung im unteren Dichtungsblatt-bereich das Dichtungsblatt eine verminderte Schwingungsneigung erfährt.

Darüber hinaus wird insgesamt der Wirkungsgrad einer Strömungsmaschine, die mit der erfindungsgemäßen Dichtungseinrichtung ausgebildet ist, vergrößert.

Da der Blow-Down-Effekt bereits bei niedrigen Massenströmen und Druckdifferenzen einsetzt, entsteht ein weiterer Vorteil, indem die Leckagemassenströme bereits im Teillastbetrieb verringert werden.

Darüber hinaus entsteht der Vorteil der erfindungsgemäßen Dichtungsplättchen, dass für den Fall eines Anstreifens der Dichtungsplättchen gegen das rotierende Bauteil eine Schädigung minimiert wird, da durch die Konstruktion der Dichtungseinrichtung eine radiale Nachgiebigkeit gegeben ist.

In einer vorteilhaften Weiterbildung ist die Fußkante gerade ausgerichtet.

Dadurch werden störende Verwirbelungen vermieden und somit die Dichtwirkung verbessert.

In einer weiteren vorteilhaften Weiterbildung weist die Stirnkante einen Knick auf. Ebenso kann die Stirnkante kreisbogenförmig ausgebildet sein.

Durch diese vergleichsweise einfachen Maßnahmen wird die Dichtwirkung verbessert. Darüber hinaus ist die Herstellung solch eines Dichtungsplättchen einfach.

Zweckdienlicherweise wird die Dichtungsanordnung in einer Strömungsmaschine verwendet.

Ausführungsbeispiele der Erfindung werden nachfolgend unter Bezugnahme auf die Zeichnungen näher beschrieben. Dabei haben mit denselben Bezugszeichen versehene Komponenten die gleiche Funktionsweise.

Dabei zeigen:
- Figur 1: eine Querschnittsansicht einer Dichtungseinrichtung gemäß Stand der Technik,
- Figur 2: eine perspektivische Darstellung einer Dichtungseinrichtung gemäß Stand der Technik,
- Figur 3: eine Draufsicht auf ein erfindungsgemäße Dichtungsplättchen,
- Figur 4: eine Draufsicht auf das erfindungsgemäße Dichtungsplättchen,
- Figur 5: eine Draufsicht eines Dichtungsplättchens gemäß Stand der Technik,
- Figur 6: eine Vorderansicht einer Dichtungseinrichtung,
- Figur 7: eine Rückansicht einer erfindungsgemäßen Dichtungseinrichtung,
- Figur 8: eine vereinfachte Schnittdarstellung einer Strömungsmaschine,
- Figur 9: eine perspektivische Darstellung der erfindungsgemäßen Dichtungseinrichtung.

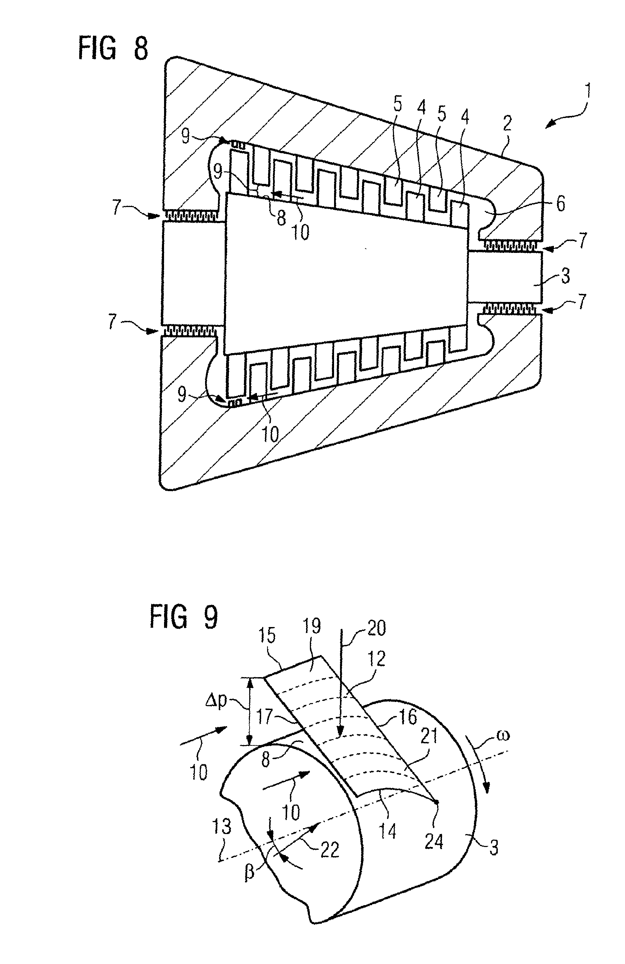

Die Dichtungseinrichtung wird vorwiegend in Strömungsmaschinen eingesetzt. Eine Strömungsmaschine ist beispielsweise eine Dampfturbine 1, die in der Figur 8 schematisch dargestellt ist. Die Dampfturbine 1 umfasst ein feststehendes Gehäuse 2 und eine rotierende Welle 3. An der rotierenden Welle 3 sind Laufschaufeln 4 angeordnet. Der Übersichtlichkeit wegen sind lediglich zwei Laufschaufeln mit dem Bezugszeichen 4 versehen. Am Gehäuse 2 sind Leitschaufeln 5 angeordnet. Der Übersichtlichkeit wegen sind in der Figur 8 lediglich zwei Leitschaufeln mit dem Bezugszeichen 5 versehen.

Im Betrieb strömt heißer Dampf am Eintritt 6 durch einen Strömungskanal der im Wesentlichen zwischen der rotierenden Welle 3 und einem Innengehäuse gebildet ist. Die thermische Energie des Dampfes wird in kinetische Energie umgewandelt und schließlich in Rotationsenergie der Welle 3 weiter umgewandelt.

Spalte entstehen dort, wo rotierende Bauteile, wie z. B. die Welle 3 und stehende Bauteile, wie z. B. das Gehäuse 2 gegeneinander abgedichtet werden sollen. Dies wären beispielsweise die Bereiche der Wellenabdichtungen 7. Diese werden üblicherweise mittels Labyrinthdichtungen realisiert. Des Weiteren wird der Bereich zwischen dem Ende einer Laufschaufel 4 und dem Gehäuse sowie dem Ende einer Leitschaufel 5 und einer Oberfläche 8 der rotierenden Welle 3 abgedichtet.

Der Bereich zwischen einer Laufschaufel 4 und dem Innengehäuse und der Bereich zwischen einer Leitschaufel 5 der Oberfläche 8 kann auch als Spalt 9 bezeichnet werden. Der Übersichtlichkeit wegen sind in der Figur 8 lediglich drei Spalte mit dem Bezugszeichen 9 versehen.

Das Gehäuse 2 kann als erstes Bauteil und die rotierende Welle kann als zweites Bauteil bezeichnet werden, wobei die rotierende Welle 3 beziehungsweise das zweite Bauteil relativ zum ersten Bauteil bewegbar ausgebildet ist. Im Betrieb strömt eine Leckageströmung in einer Leckageströmungsrichtung 10 durch den Spalt 9.

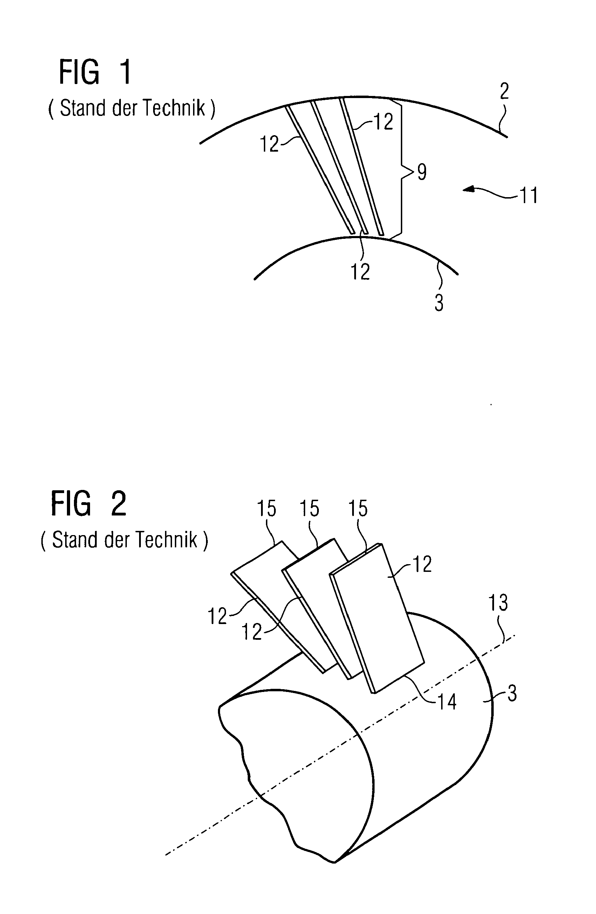

In der Figur 1 ist eine Dichtungseinrichtung 11 gemäß dem Stand der Technik zu sehen. Zwischen einem rotierenden Bauteil 3 und einem feststehenden Bauteil 2 ist ein Spalt 9 gebildet. Das zweite Bauteil ist relativ zum ersten Bauteil bewegbar. Die Leckageströmung strömt senkrecht zur Bildebene in Richtung das Dichtungsplättchens 12. Die in der Figur 1 dargestellten Plättchen 12 sind dünn und vorwiegend gerade ausgebildet.

In Figur 2 ist eine perspektivische Darstellung der Dichtungsplättchen 12 gemäß dem Stand der Technik zu sehen. Das zweite Bauteil 3 ist um eine Rotationsachse 13 drehbar gelagert. Die Dichtungsplättchen 12 sind am ersten Bauteil 2 fest angeordnet und als dünne Plättchen ausgebildet. Die dünnen Plättchen weisen eine Stirnkante 14 und eine Fußkante 15 auf, wobei die Fußkante fest am ersten oder zweiten Bauteil angebracht ist. Die Stirnkante 14 ragt hierbei in den Spalt 9 hinein.

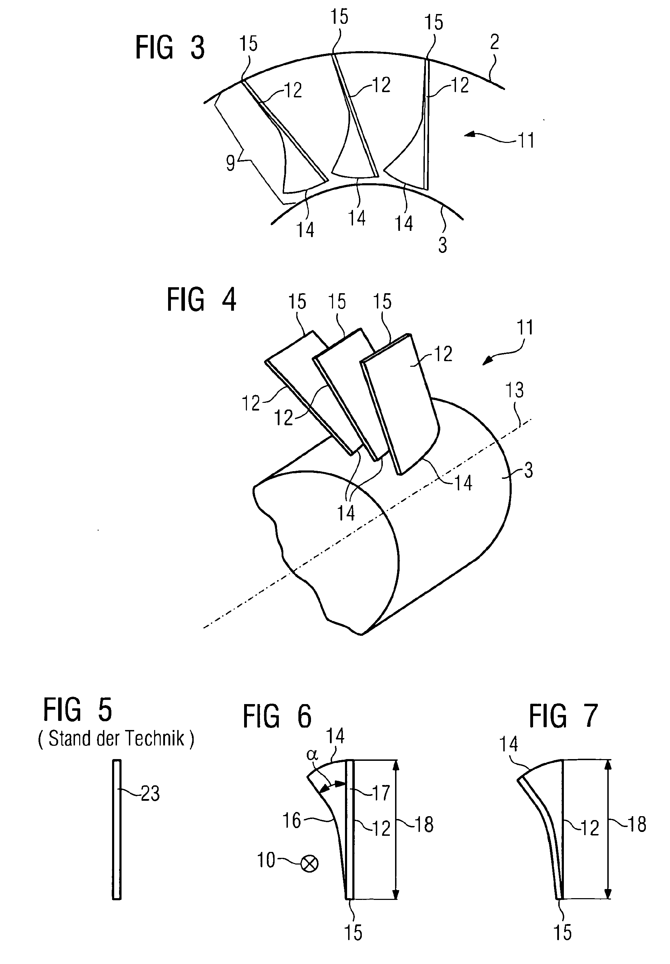

In der Figur 3 ist eine erfindungsgemäße Ausbildung der Dichtungsplättchen 12 zu sehen. Im Wesentlichen ist hierbei die Fußkante 15 gegenüber einem Verlauf der Stirnkante 14 versetzt. In der in Figur 3 dargestellten Ausführungsform ist die Fußkante 15 am ersten Bauteil 2 fest angeordnet und die freie Stirnkante 14 ragt in den Spalt hinein. In alternativen Ausführungsformen kann die Fußkante 15 auch am zweiten Bauteil 13 fest angebracht werden und die freie Stirnkante 14 kann in den Spalt 9 in Richtung des festen Bauteils 2 hineinragen.

In der Figur 4 ist eine perspektivische Darstellung der erfindungsgemäßen aus dem Dichtungsplättchen 12 gebildete Dichtungseinrichtung 11 zu sehen. Der Übersichtlichkeit wegen wurde das erste Bauteil 2 weggelassen. Das zweite Bauteil 3 ist um eine Rotationsachse 13 drehbar gelagert. Die Dichtungseinrichtung 11 weist eine fest an das nicht dargestellte erste Bauteil angeordnete Fußkante 15 auf. Die in den Spalt 9 hineinragende freie Stirnkante 14 ist hierbei gegenüber der Fußkante 15 derart ausgerichtet, dass die Ausrichtung der Fußkante 15 gegenüber einer Ausrichtung der Stirnkante 14 versetzt ist.

In Figur 5 ist eine Draufsicht eines Dichtungsplättchens 23 gemäß Stand der Technik zu sehen. Das Dichtungsplättchen 23 ist hierbei geradlinig ausgebildet, wohingegen in der Figur 6 eine erfindungsgemäße Ausführungsform des Dichtungsplättchens 12 zu sehen ist. Hierbei ist in der Figur 6 eine Draufsicht auf das Dichtungsplättchen 12 zu sehen, wobei unter Draufsicht eine Blickrichtung in Leckageströmungsrichtung 10 auf die Zeichenebene zu verstehen ist. Im Wesentlichen ist hierbei eine Fußkante 15 gegenüber der Stirnkante 14 versetzt ausgerichtet. Das Dichtungsplättchen 12 erstreckt sich dabei im Wesentlichen senkrecht zu einer Leckageströmungsrichtung 11.

Das Dichtungsplättchen 12 weist eine Abströmkante 16 und eine Anströmkante 17 auf. In alternativen Ausführungsformen kann die Abströmkante 16 abgeknickt ausgebildet sein. In einer weiteren Ausführungsform kann das Dichtungsplättchen im Wesentlichen in der Mitte abgeknickt sein.

Denkbar ist auch, dass das Dichtungsplättchen ab 75% der Gesamtlänge 18 abgeknickt ausgebildet ist. Im Wesentlichen ist die Abströmkante in einem Winkel α zwischen 10° und 80° abgeknickt.

In der Figur 9 ist eine perspektivische Darstellung des Dichtungsplättchen 12 dargestellt. Das Dichtungsplättchen 12 weist einen oberen Blattbereich 19 auf, der gerade ausgebildet ist, um eine Federwirkung zu ermöglichen. Zwischen dem oberen Blattbereich 19 und der Oberfläche 8 eines rotierenden zweiten Bauteils 3 ist eine Druckdifferenz Δp ausgebildet. Das zweite Bauteil 3 rotiert mit einer Umdrehungsfrequenz ω. In der Regel liegt die Umdrehungsfrequenz bei 50Hz bzw. 60Hz, kann aber auch höher oder niedriger liegen. Eine Leckage strömt in einer Leckageströmungsrichtung 10 im Wesentlichen parallel zur gerade ausgebildeten Fußkante 15, die in der in Figur 9 dargestellten Ausführungsform an dem nicht näher dargestellten ersten Bauteil 2 fest angeordnet ist. Den Verlauf der Fußkante 15 ist gegenüber einem Verlauf der Stirnkante 14 versetzt.

Durch die Anströmkante 17 und die Fußkante 15 wird eine Ebene gebildet. Das Dichtungsplättchen 12 ist derart ausgebildet, dass ein Eckpunkt 24, der ein Schnittpunkt zwischen der Abströmkante 16 und der Stirnkante 14 ist, außerhalb der Ebene liegt.

Die Leckageströmung in Richtung der Leckageströmungsrichtung 10 führt zu physikalischen Effekten bei der Umströmung des Dichtungsplättchens 12. Ein physikalischer Effekt ist, dass eine Kraft 20 auf das Dichtungsplättchen 12 derart wirkt, dass das Dichtungsplättchen 12 in Richtung des Spaltes 9 gedrückt wird. Dadurch wird die Dichtungswirkung verbessert.

Das Dichtungsplättchen 12 zeichnet sich dadurch aus, dass ein unterer Blattbereich 21 gebogen oder geknickt ausgebildet ist, um einen Abtrieb in Richtung der Kraft 20 zu erzeugen. Die Leckageströmung führt zu einem Massenstrom m., der in einer Richtung 22 zu den Dichtungsplättchen 12 strömt. Diese Richtung 22 ist unter einem Metallwinkel β zu einem Inzidenzwinkel ausgerichtet.

Um den Abtrieb besonders effizient zu gestalten, kann das gesamte Plättchen 12 geneigt ausgebildet sein, um einen Blow-Down-Effekt zu erzeugen.

## Patentansprüche

1. Dichtungsplättchen (12) zum Vermindern einer Leckageströmung in einem Spalt (9) zwischen einem ersten Bauteil und einem relativ zum ersten Bauteil bewegbaren zweiten Bauteil,
wobei im Betrieb eine Leckageströmung in einer Leckageströmungsrichtung(10) durch den Spalt (9) strömt,
wobei das Dichtungsplättchen (12) eine Fußkante (15) zur Befestigung am ersten oder zweiten Bauteil und eine freie Stirnkante (14) aufweist,
**dadurch gekennzeichnet, dass**
ein Verlauf der Fußkante (14) gegenüber einem Verlauf der Stirnkante (15) versetzt ist.

2. Dichtungsplättchen (12) nach Anspruch 1,
bei der die Fußkante (14) gerade ausgerichtet ist.

3. Dichtungsplättchen (12) nach Anspruch 1 oder 2,
mit einer Anström- (17) und Abströmkante (16),
wobei durch die Anström- (17) und die Fußkante (15) eine Ebene gebildet ist und ein Eckpunkt (24), der ein Schnittpunkt zwischen der Abström- (16) und Stirnkante (14) ist, außerhalb der Ebene liegt.

4. Dichtungsplättchen (12) nach einem der Ansprüche 1 bis 3,
bei der die Stirnkante (14) einen Knick aufweist.

5. Dichtungsplättchen (12) nach einem der Ansprüche 1 bis 3,
bei der die Stirnkante (14) kreisbogenförmig ausgebildet ist.
